# EUROPEAN PATENT SPECIFICATION

(11) **EP 2 501 017 B1**
(45) Date of publication and mention of the grant of the patent: **12.04.2017**
(21) Application number: 10828120.5
(22) Date of filing: 19.02.2010
(51) Int. Cl.: H02J 7/34, B60L 11/18, B60M 3/00, H02J 7/00

(54) **POWER SUPPLY SYSTEM**
STROMVERSORGUNGSSYSTEM
SYSTÈME D'ALIMENTATION ÉLECTRIQUE

(30) Priority: 09.11.2009 JP 2009256532
(43) Date of publication of application: 19.09.2012
(73) Proprietor: Kabushiki Kaisha Toshiba, Minato-ku Tokyo 105-8001 (JP)
(72) Inventor: INAGAKI, Katsuhisa, Minato-ku Tokyo 105-8001 (JP); NOGI, Masayuki, Minato-ku Tokyo 105-8001 (JP); OKAMOTO, Shinji, Minato-ku Tokyo 105-8001 (JP); MIYAJIMA, Hiroki, Minato-ku Tokyo 105-8001 (JP); KOIZUMI, Satoshi, Minato-ku Tokyo 105-8001 (JP); YAMADA, Toshiaki, Minato-ku Tokyo 105-8001 (JP)
(74) Representative: Hoffmann Eitle
(86) International application number: PCT/JP2010/052552
(87) International publication number: WO 2011/055559

(56) References cited:
- EP-A1- 1 864 849
- JP-A- 2001 287 572
- JP-A- 2001 287 572
- JP-A- 2008 172 857
- JP-A- 2008 172 857
- JP-A- 2008 211 939
- JP-A- 2008 211 939
- JP-A- 2009 207 328
- JP-A- 2009 207 328

## Description

### Technical Field

The present invention relates to a feed system that feeds power to a mobile unit including, for example, a secondary battery.

### Background Art

With technological development of a secondary battery in recent years, the secondary battery is growing in capacity. A secondary battery having a large capacity is mounted on, for example, a mobile unit such as an electric rolling stock, electric bus, and electric vehicle.

In Patent Literature 1, which is a patent literature for application in Japan, an electric rolling stock including a secondary battery capable of receiving power and storing the received power is described. The electric rolling stock drives a motor by controlling the charge and discharge of the secondary battery. Thus, the electric rolling stock capable of driving the motor with the secondary battery can run also in a section without stringing or the like.

### Prior Art

### Patent Documents

Patent Literature 1: Jpn. Pat. Appln. KOKAI Publication No. 2008-148531

EP 1 864 849 A1 discloses an energy control system , as defined by the preamble of claim 1, for a vehicle in which the system has a high-power electrical storage unit (SC-INT) such as super capacitor, placed in a vehicle (V) e.g. train. The energy recovered during braking of the vehicle is stored in the storage unit. A departure station (S1) has an electrical loading area (CHARGE-AREA) for loading the storage unit and activated in a loading mode when the residual energy of the storage unit is below a variable threshold dependent on an early estimate of the energy balance of the vehicle up to an arrival station, where the loading area is connected with an electrical energy source such as power grid.

### Summary of Invention

### Object(s) of Invention

However, the secondary battery needs a longer charging time in accordance with capacity. That is, if the secondary battery has a large capacity, a problem of a longer charging time is posed.

A large-capacity secondary battery can be charged in a short time by increasing a current passed to the secondary battery. That is, the secondary battery can rapidly be charged by passing the maximum current within an allowable range of current of the secondary battery to the secondary battery.

However, a feed system that rapidly charges the secondary battery poses a problem of an increasing size and higher costs. Moreover, the feed system increases the load on an electric power system. Thus, a problem of a possible effect of the electric power system on the neighborhood is posed. Furthermore, with a longer standby time of the feed system, the operating ratio thereof decreases.

Thus, an object of an embodiment of the present invention is to provide a small feed system capable of rapidly charging a secondary battery included in a mobile unit at a low cost.

### Means for Solving the Problem(s)

According to one embodiment, a feed system feeding power to a mobile unit comprises all features of independent patent claim 1.

### Advantageous Effects of Invention

According to an embodiment of the present invention, a small feed system capable of rapidly charging a secondary battery included in a mobile unit at a low cost can be provided.

### Brief Description of Drawings

FIG. 1 is an explanatory view illustrating a configuration example of a feed system according to a first embodiment of the present invention.
FIG. 2 is an explanatory view illustrating another configuration example of the feed system shown in FIG. 1.
FIG. 3 is an explanatory view illustrating a configuration example of a feed system according to a second embodiment of the present invention.
FIG. 4 is an explanatory view illustrating a configuration example of a feed system according to a third embodiment of the present invention.
FIG. 5 is an explanatory view illustrating a configuration example of a feed system according to a fourth embodiment of the present invention.

### Best Mode for Carrying Out the Invention

A feed system according to the first embodiment of the present invention will be described in detail below with reference to drawings.

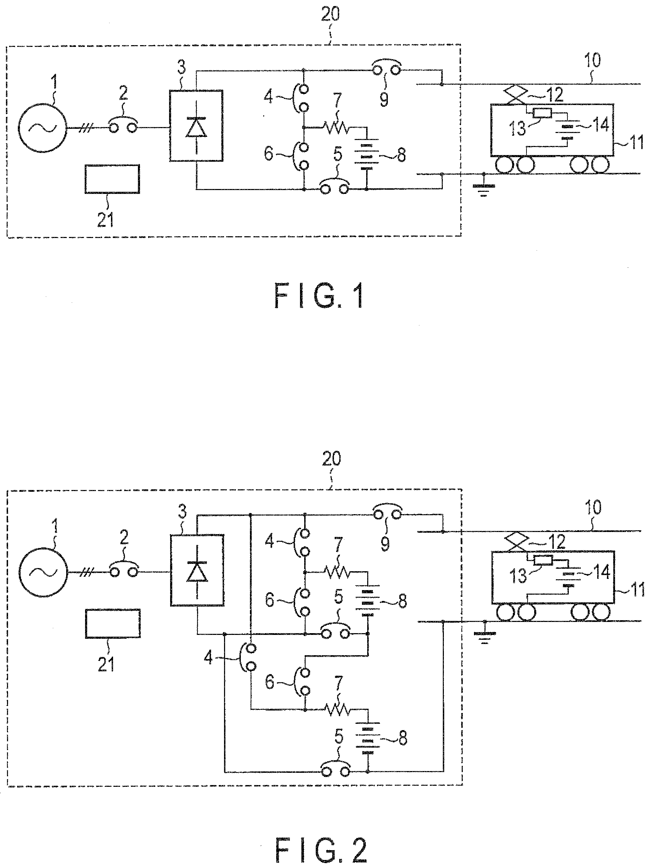

FIG. 1 is an explanatory view illustrating a configuration example of a feed system according to the first embodiment of the present invention.

A feed system 20 includes an electric power system 1, a power receiving breaker 2, a rectifier 3, charging breakers 4, 5, a discharging breaker 6, a current-limiting reactor 7, a secondary battery 8, a feeding breaker 9, and a feeder 10.

A mobile unit 11 connected to the feeder 10 includes a power receiving apparatus 12, a current control element 13, and a secondary battery 14.

The electric power system 1 supplies alternating current power. The power receiving breaker 2 is connected between the electric power system 1 and the rectifier 3. Power of the electric power system 1 is supplied to the rectifier 3 via the power receiving breaker 2.

The rectifier 3 rectifies alternating current power to direct current power. That is, the electric power system 1 and the rectifier 3 function as power generation units that generate direct current power. The electric power system 1 functions as a power source that generates alternating current power. The rectifier 3 functions as a conversion unit that converts alternating current power to direct current power.

The charging breaker 4, the charging breaker 5, the discharging breaker 6, and the current-limiting reactor 7 are connected to the output side of the rectifier 3. Further, the secondary battery 8 is connected between the charging breaker 5 and the current-limiting reactor 7. The secondary battery 8 is a charging unit that can be charged with power.

Further, the feeding breaker 9 is connected to the output side of the rectifier 3. The feeding breaker 9 is connected to the feeder 10. The feeder 10 is a connection unit to which the mobile unit 11 is connected. The feeder 10 can be connected to the power receiving apparatus 12 of the mobile unit 11. That is, the feeder 10 functions as a feeding spot that feeds power to the mobile unit 11.

For example, the mobile unit 11 such as an electric car and electric bus feeds power received from the feeder 10 through the power receiving apparatus 12 to the secondary battery 14. The current control element 13 controls power received by the power receiving apparatus 12 from the feeder 10 according to specifications of the secondary battery 14.

The feed system 20 further includes a control unit 21 that controls to switch each of the breakers. The control unit 21 is a control unit that controls the operation and connection of each unit inside the feed system 20.

If, for example, the power receiving apparatus 12 is not connected to the feeder 10, that is, if the mobile unit 11 is not present in a feeding spot, the control unit 21 moves to a charging mode.

When moving to the charging mode, the control unit 21 turns on the charging breaker 4 and the charging breaker 5. Further, the control unit 21 turns off the discharging breaker 6 and the feeding breaker 9. In this case, the rectifier 3, the current-limiting reactor 7, and the secondary battery 8 are connected in series. Accordingly, the feed system 20 charges the secondary battery 8.

If, for example, the power receiving apparatus 12 is connected to the feeder 10, that is, if the mobile unit 11 is present in a feeding spot, the control unit 21 moves to a feeding mode.

When moving to the feeding mode, the control unit 21 turns off the charging breaker 4 and the charging breaker 5. Further, the control unit 21 turns on the discharging breaker 6 and the feeding breaker 9. In this case, the rectifier 3, the current-limiting reactor 7, the secondary battery 8, and the mobile unit 11 are connected in series. That is, power obtained by combining power of the rectifier 3 and power of the secondary battery 8 is fed to the mobile unit 11. As a result, the mobile unit 11 can receive large power.

If a ground fault or short circuit accident occurs in the feed system 20 or the feeder 10, the control unit 21 trips the charging breaker 4, the discharging breaker 6, or the feeding breaker 9. Because, as described above, the current-limiting reactor 7 that limits a rapid increase in current is connected to the circuit, the feed system 20 can protect the feed system 20 and the mobile unit 11.

The control unit 21 determines whether the mobile unit 11 is present in a feeding spot by using a sensor (not shown) or the like. However, the configuration to determine whether the mobile unit 11 is present in a feeding spot is not limited to the configuration. For example, a configuration in which the feeding breaker 9 is always turned on and whether the mobile unit 11 is present in a feeding spot is determined by determining whether a current flows through the feeding breaker 9 by the control unit 21 may also be adopted.

If the mobile unit 11 is present in a feeding spot while the feeding breaker 9 is always turned on, a current flows through the feeding breaker 9. That is, if a current flows through the feeding breaker 9, the control unit 21 determines that the mobile unit 11 is present in a feeding spot. In this case, the control unit 21 moves to the feeding mode.

If the mobile unit 11 is not present in a feeding spot while the feeding breaker 9 is always turned on, a current flowing through the feeding breaker 9 does not exist. That is, if a current flowing to the feeding breaker 9 does not exist, the control unit 21 determines that the mobile unit 11 is not present in a feeding spot. In this case, the control unit 21 moves to the charging mode.

When reaching a feeding spot, the mobile unit 11 performs a micro charging operation through the current control element 13. Accordingly, the feed system 20 can move from the charging mode to the feeding mode reliably and safely.

By detecting the voltage received by the power receiving apparatus 12, the current control element 13 of the mobile unit 11 detects that the mode of the feed system 20 is switched from the charging mode to the feeding mode.

If switching of the mode of the feed system 20 from the charging mode to the feeding mode is detected, the current control element 13 controls the amount of charging to a preset value. That is, the current control element 13 controls the amount of current to a value appropriate for charging the secondary battery 14.

Alternatively, for example, a configuration in which the feeding breaker 9 is always turned off and whether the mobile unit 11 is present in a feeding spot is determined by the control unit 21 based on a potential difference between both terminals of the feeding breaker 9 may also be adopted.

If the feeding breaker 9 is always turned off, the potential difference between both terminals of the feeding breaker 9 when the mobile unit 11 is present in a feeding spot is smaller than the potential difference between both terminals of the feeding breaker 9 when the mobile unit 11 is not present in a feeding spot. By presetting a threshold to the potential difference, the control unit 21 determines whether the mobile unit 11 is present in a feeding spot.

That is, if the potential difference between both terminals of the feeding breaker 9 is smaller than the threshold, the control unit 21 determines that the mobile unit 11 is present in a feeding spot. In this case, the control unit 21 moves to the feeding mode.

If the potential difference between both terminals of the feeding breaker 9 is larger than the threshold, the control unit 21 determines that the mobile unit 11 is not present in a feeding spot. In this case, the control unit 21 moves to the charging mode.

Further, a configuration in which the feeding breaker 9 is always turned on and whether the mobile unit 11 is present in a feeding spot is determined by the control unit 21 based on a potential difference between the feeder 10 and a ground may also be adopted.

If the feeding breaker 9 is always turned on, the potential difference between the feeder 10 and a ground when the mobile unit 11 is present in a feeding spot is larger than the potential difference between the feeder 10 and a ground when the mobile unit 11 is not present in a feeding spot. By presetting a threshold to the potential difference, the control unit 21 determines whether the mobile unit 11 is present in a feeding spot.

That is, if the potential difference between the feeder 10 and a ground is larger than the threshold, the control unit 21 determines that the mobile unit 11 is present in a feeding spot. In this case, the control unit 21 moves to the feeding mode.

If the potential difference between the feeder 10 and a ground is smaller than the threshold, the control unit 21 determines that the mobile unit 11 is not present in a feeding spot. In this case, the control unit 21 moves to the charging mode.

If charging of the secondary battery 14 of the mobile unit 11 is completed, the control unit 21 switches the feed system 20 back to the charging mode from the feeding mode. That is, when the amount of charging of the secondary battery 14 of the mobile unit 11 reaches a preset amount of charging or the mobile unit 11 is separated from a feeding spot, the control unit 21 switches the feed system 20 back to the charging mode from the feeding mode.

When charging of the secondary battery 14 should be stopped, the current control element 13 of the mobile unit 11 attenuates and cuts off a current flowing to the secondary battery 14. For example, the control unit 21 of the feed system 20 detects a current flowing to the feeding breaker 9. If the detected current value is smaller than the preset value, the control unit 21 switches the feed system 20 back to the charging mode from the feeding mode.

Alternatively, for example, a configuration in which the control unit 21 switches the mode in accordance with time may also be adopted. The control unit 21 has preset time limit information. The time limit information corresponds to, for example, the time or an elapsed time after switching from the charging mode to the feeding mode.

When control is exercised based on the time, the control unit 21 switches the feed system 20 back to the charging mode from the feeding mode at a preset time. When control is exercised based on an elapsed time, the control unit 21 counts the elapsed time after switching from the charging mode to the feeding mode. If the counted time exceeds a preset time, the control unit 21 switches the feed system 20 back to the charging mode from the feeding mode.

Alternatively, a configuration in which the control unit 21 switches the mode when preset electric energy is fed to the mobile unit 11 may be adopted. If, for example, a plurality of the feed systems 20 is installed on some path, the control unit 21 calculates electric energy needed for the mobile unit 11 to move to the next feeding spot in advance based on energy efficiency of the mobile unit 11, the distance between feeding spots and the like.

The control unit 21 of the feed system 20 stores the electric energy needed for the mobile unit 11 to reach the next feeding spot. Further, the control unit 21 controls electric energy with which the secondary battery 8 is charged by switching the feeding mode and the charging mode in accordance with the stored electric energy. Accordingly, the electric energy with which the secondary battery 14 of the mobile unit 11 is charged can be maintained at the right level.

Alternatively, a configuration in which the secondary battery 8 is charged as usual and electric energy fed to the mobile unit 11 is controlled by switching between the feeding mode and the charging mode in accordance with the stored electric energy may be adopted.

That is, if the control unit 21 determines that the stored electric energy has been fed to the mobile unit 11, the control unit 21 switches the feed system 20 back to the charging mode from the feeding mode. By performing the processing for each spot, the secondary battery 14 of the mobile unit 11 can efficiently be charged.

According to the configuration, the capacity of the electric power system 1 can be limited and thus, a smaller size and lower costs of the electric power system 1 can be realized. For example, if it is assumed that the voltage of the electric power system 1 in the configuration shown in FIG. 1 is 210 V, the output voltage of the rectifier 3 and the charging voltage of the secondary battery 8 are each 280 V. That is, according to the configuration, the voltage of 560 V can be fed to the mobile unit 11. Accordingly, the secondary battery 14 of the mobile unit 11 can be charged with power of 560 V.

If the secondary battery 8 is not present inside the feed system 20, it is necessary to increase the voltage of the electric power system 1 to provide the same power to the mobile unit 11. If the voltage of the electric power system 1 is increased, costs and installation capacity mount. However, as described above, a high voltage can be fed to the mobile unit 11 using the electric power system 1 at a low voltage by connecting the secondary battery 8. As a result, a small feed system capable of rapidly charging a secondary battery of a mobile unit can be provided at a low cost.

If the charging breaker 4, the charging breaker 5, the discharging breaker 6, the current-limiting reactor 7, and the secondary battery 8 constitute a set of secondary battery system, the feed system 20 in the embodiment is described as a configuration including a set of the rectifier 3 and a set of secondary battery system. However, the feed system 20 is not limited to the configuration. The feed system 20 may have a configuration including a set of the rectifier 3 and a plurality of sets of secondary battery system.

FIG. 2 is an explanatory view illustrating another configuration example of the feed system shown in FIG. 1. According to the example shown in FIG. 2, the feed system 20 includes two sets of secondary battery system.

When moving the feed system 20 to the charging mode, the control unit 21 turns on the charging breaker 4 and the charging breaker 5 in each of the two sets of secondary battery system. Further, the control unit 21 turns off the discharging breaker 6 and the feeding breaker 9 of the two sets of secondary battery system. In this case, the two secondary batteries 8 are connected in parallel with the rectifier 3. The feed system 20 charges each of the secondary batteries 8.

When moving the feed system 20 to the feeding mode, the control unit 21 turns off the charging breaker 4 and the charging breaker 5 in each of the two sets of secondary battery system. Further, the control unit 21 turns on the discharging breaker 6 and the feeding breaker 9 of the two sets of secondary battery system. In this case, the rectifier 3, the two secondary batteries 8, and the mobile unit 11 are connected in series. That is, power obtained by combining power of the rectifier 3 and power of the two secondary batteries 8 is fed to the mobile unit 11. As a result, the mobile unit 11 can receive still larger power.

With the configuration, for example, power can still be fed even if the rated voltage of the secondary battery 14 of the mobile unit 11 is twice the rectified voltage of the electric power system 1 or more.

Also in this case, the control unit 21 can charge only the specific secondary battery 8 by switching each of the charging breakers 4 and the charging breakers 5. Accordingly, for example, the control unit 21 first charge the first secondary battery 8 and after charging of the first secondary battery 8 is completed, can charge the second secondary battery 8. As a result, the feed system 20 can flexibly control the amount of charging of each secondary battery.

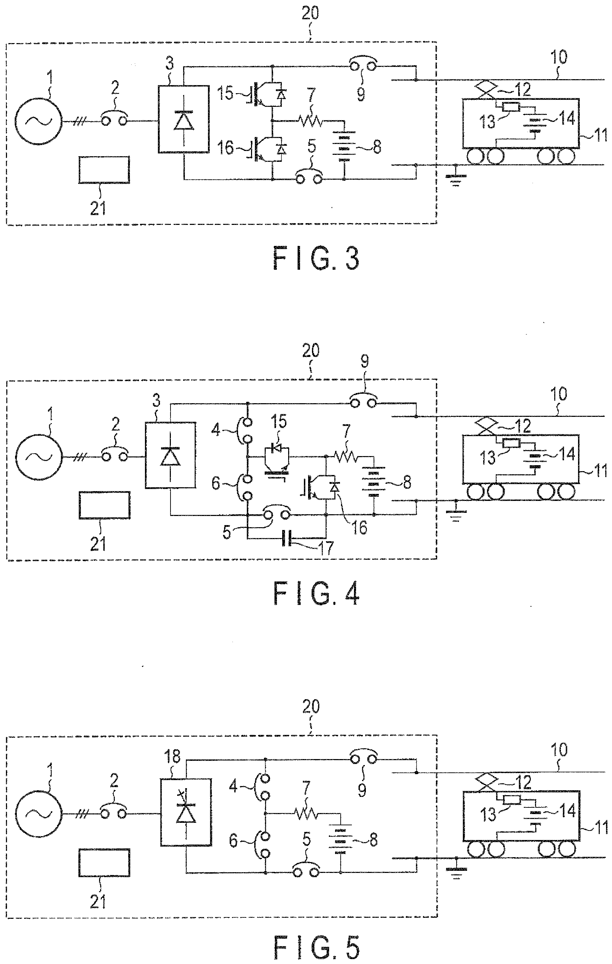

FIG. 3 is an explanatory view illustrating a configuration example of a feed system according to the second embodiment of the present invention. The same reference numerals are attached to components similar to those in the first embodiment and a detailed description thereof is omitted.

A feed system 20 shown in FIG. 3 is different from the first embodiment in that a semiconductor switch 15 is included instead of a charging breaker 4 and a semiconductor switch 16 is included instead of a discharging breaker 6.

The semiconductor switch 15 and the semiconductor switch 16 are configured by switches having self-extinguishing capabilities such as an Insulated Gate Bipolar Transistor (IGBT). The semiconductor switch 15 and the semiconductor switch 16 function as current control units that control a current flowing to a secondary battery 8.

If the feed system 20 is in charging mode, a control unit 21 turns on a charging breaker 5. The control unit 21 also controls the amount of charging with which the secondary battery 8 is charged by adjusting the ratio of on-off time of the semiconductor switches 15, 16 to adjust the current flowing to a current-limiting reactor 7.

If the feed system 20 is in feeding mode, a control unit 21 turns off the charging breaker 5 and turns on a feeding breaker 9. The control unit 21 always controls the semiconductor switch 15 to OFF. Further, the control unit 21 always controls the semiconductor switch 16 to ON. Accordingly, a rectifier 3, the secondary battery 8, the current-limiting reactor 7, and a mobile unit 11 are connected in series. That is, power obtained by combining power of the rectifier 3 and power of the secondary battery 8 is fed to the mobile unit 11.

According to the configuration, the feed system 20 can reliably control the amounts of charging and discharging of the secondary battery 8. Accordingly, the feed system 20 can easily manage the residual amount of the secondary battery 8.

FIG. 4 is an explanatory view illustrating a configuration example of a feed system according to the third embodiment of the present invention. The same reference numerals are attached to components similar to those in the first embodiment and a detailed description thereof is omitted.

A feed system 20 shown in FIG. 4 is different from the first embodiment in that a semiconductor switch 15 connected among a current-limiting reactor 7, a charging breaker 4, and a discharging breaker 6, a semiconductor switch 16 connected among the current-limiting reactor 7, a charging breaker 5, and the semiconductor switch 15, and a booster filter capacitor 17 connected in parallel with the charging breaker 5 are included. The booster filter capacitor 17 is a voltage step-up/step-down unit capable of stepping up/stepping down the voltage fed to a mobile unit 11.

For example, a step-up circuit to step up the voltage fed to the mobile unit 11 is configured by the charging breaker 4, the discharging breaker 6, the semiconductor switch 15, the semiconductor switch 16, and the booster filter capacitor 17.

If the feed system 20 is in charging mode, a control unit 21 turns on the charging breaker 4 and the charging breaker 5. The control unit 21 also controls the amount of charging with which the secondary battery 8 is charged by adjusting the ratio of on-off time of the semiconductor switches 15, 16 to adjust the current flowing to the current-limiting reactor 7.

If the feed system 20 is in feeding mode, the control unit 21 turns off the charging breaker 4 and the charging breaker 5. Also, the control unit 21 turns on the discharging breaker 6 and a feeding breaker 9. Further, the control unit 21 controls the voltage between both ends of the booster filter capacitor 17 by controlling the on-off time of the semiconductor switch 15 and the semiconductor switch 16.

According to the configuration, the feed system 20 can feed power obtained by combining power of the rectifier 3, power of the secondary battery 8, and power of the booster filter capacitor 17 to the mobile unit 11.

Moreover, the feed system 20 can vary the voltage fed to the mobile unit 11 by controlling the voltage between both ends of the booster filter capacitor 17. That is, the feed system 20 can fit the voltage fed to the mobile unit 11 to the secondary battery 14 of the mobile unit 11. In this case, the current control element 13 of the mobile unit 11 can be omitted.

Incidentally, the feed system 20 shown in FIG. 4 can still feed power to the mobile unit 11 even if the electric power system 1 or the rectifier 3 fails. If the electric power system 1 or the rectifier 3 does not operate, the feed system 20 turns on the charging breaker 4 and the discharging breaker 6 and performs an on-off operation of the semiconductor switches 15, 16. Accordingly the feed system 20 steps up the voltage of the secondary battery 8. As a result, the feed system 20 can feed power at a high voltage to the mobile unit 11.

FIG. 5 is an explanatory view illustrating a configuration example of a feed system according to the fourth embodiment of the present invention. The same reference numerals are attached to components similar to those in the first embodiment and a detailed description thereof is omitted.

A feed system 20 shown in FIG. 5 is different from the first embodiment in that, instead of a rectifier 3, a variable rectifier 18 is included. The variable rectifier 18 functions as a current control unit that controls a direct current to be output. The variable rectifier 18 is configured by, for example, a thyristor rectifier or a Pulse-Width Modulation (PWM) rectifier including a self-extinguishing element.

If the feed system 20 is in charging mode, a control unit 21 turns on a charging breaker 4 and a charging breaker 5. The control unit 21 also controls the amount of charging with which a secondary battery 8 is charged by adjusting output of the variable rectifier 18 to adjust the current flowing to a current-limiting reactor 7.

If the feed system 20 is in feeding mode, the control unit 21 turns off a charging breaker 4 and a charging breaker 5. Also, the control unit 21 turns on a discharging breaker 6 and a feeding breaker 9. Further, the control unit 21 controls power fed to the mobile unit 11 by controlling output of the variable rectifier 18.
According to the configuration, the feed system 20 can feed power obtained by combining power output from the variable rectifier 18 and power of the secondary battery 8 to the mobile unit 11.

Also in this case, the feed system 20 can control power fed to the mobile unit 11 by adjusting output of the variable rectifier 18. That is, the feed system 20 can fit power fed to the mobile unit 11 to specifications of the secondary battery 14 of the mobile unit 11. In this case, a current control element 13 of the mobile unit 11 can be omitted.

The variable rectifier 18 may include a regeneration function. The variable rectifier 18 is a conversion unit that converts received direct current power to alternating current power. If the variable rectifier 18 includes the regeneration function, the variable rectifier 18 converts power of the secondary battery 8 of the feed system 20 to an alternating current.

Further, the variable rectifier 18 can also convert power of a secondary battery 14 of the mobile unit 11 to an alternating current. As a result, the feed system 20 can still supply alternating current power to facilities connected to an electric power system 1 even if the electric power system 1 fails.

The present invention is defined by the claims and not limited to the embodiments.

For example, a configuration including two sets of the secondary battery 8 or more can be implemented in the second to fourth embodiments.

The embodiments are described by assuming a configuration in which power is fed to the mobile unit 11 through the feeder 10, but the present invention is not limited to such an embodiment. The feeder 10 is an example and any configuration capable of connecting to a power receiving apparatus 12 of the mobile unit 11 may be adopted.

### Industrial Applicability

According to an embodiment of the present invention, a small feed system capable of rapidly charging a secondary battery of a mobile unit can be provided at a low cost.

### Explanation of Reference Symbols

1: Electric power system, 2: Power receiving breaker, 3: Rectifier, 4: Charging breaker, 5: Charging breaker, 6: Discharging breaker, 7: Current-limiting reactor,
8: Secondary battery, 9: Feeding breaker, 10: Feeder, 11: Mobile unit, 12: Power receiving apparatus, 13: Current control element, 14: Secondary battery, 15: Semiconductor switch, 16: Semiconductor switch, 17: Booster filter capacitor, 18: Variable rectifier, 20: Feed system

## Claims

1. A feed system (20) for feeding power to a mobile unit (11), comprising:
a connection unit (10) to which the mobile unit (11) is connectable;
a power generation unit (3; 18) for converting received alternating current power to direct current power;
a charging unit (8) for giving a charge of power generated by the power generation unit (3; 18); and
a control unit (21) for determining whether the mobile unit (11) is connected to the connection unit (10) **characterised in that** said control unit (21) is arranged such that if the mobile unit (11) is not connected to the connection unit (10), the control unit (21) connects the power generation unit (3; 18) and the charging unit (8) so that the charging unit (8)is charged with the power output from the power generation unit (3; 18), and if the mobile unit (11) is connected to the connection unit (10), the control unit (21) connects the mobile unit (11), the power generation unit (3; 18), and the charging unit (8) so that the power as a sum of the power output from the power generation unit (3; 18) and the power output from the charging unit (8)is fed to the mobile unit (11).

2. The feed system according to claim 1, **characterized in that** the control unit (21) is arranged to determine whether the mobile unit (11) is connected to the connection unit (10) by detecting a current in the connection unit (10).

3. The feed system according to claim 1 or 2, **characterized in that** the control unit is arranged to determine whether the mobile unit (11) is connected to the connection unit (10) by detecting a potential difference in the connection unit (10).

4. The feed system according to one of claims 1 to 3, **characterized in that** if it is detected that a time corresponding to preset time limit information after starting feeding to the mobile unit (11) has passed, the control unit (21) is arranged to stop the feeding to the mobile unit (11).

5. The feed system according to one of claims 1 to 4, **characterized in that** if it is detected that preset electric energy has been fed to the mobile unit (11), the control unit (21) is arranged to stop the feeding to the mobile unit (11).

6. The feed system according to one of claims 1 to 5, **characterized by** further comprising:
a current control unit (15; 16) for controlling a current flowing to the charging unit (8).

7. The feed system according to one of claims 1 to 6, **characterized by** further comprising:
a voltage step-up/step-down unit (17) for stepping up/stepping down a voltage to be output.

8. The feed system according to one of claims 1 to 7, **characterized in that** the power generation unit (3; 18) includes a current control unit that controls a direct current to be output.

9. The feed system according to one of claims 1 to 8, **characterized in that** the power generation unit (3; 18) includes a conversion unit for converting the direct current power output from a secondary battery included in the charging unit (8) or the mobile unit (11) to alternating current.

10. The feed system according to one of claims 1 to 9, **characterized in that** the charging unit (8) includes a plurality of secondary batteries to give the charge of the direct current power, and the control unit (21) is arranged to connect the power generation unit (3; 18) and the plurality of secondary batteries in parallel if the mobile unit (11) is not connected to the connection unit and to connect the mobile unit (11), the power generation unit (3; 18), and the plurality of secondary batteries in series if the mobile unit (11) is connected to the connection unit.

11. The feed system according to claim 10, **characterized in that** the control unit (21) is arranged to select the secondary battery to be charged from the plurality of secondary batteries and connects the power generation unit (3; 18) and the plurality of secondary batteries so that the selected secondary battery is charged.

12. The feed system according to one of claims 1 to 11, **characterized in that** the control unit (21) is arranged to calculate electric energy based on energy efficiency and a moving distance, to store the calculated electric energy, and to control the electric energy to be fed to the mobile unit (11) based on the stored electric power.

## Patentansprüche

1. Zuführungssystem (20) zum Zuführen von Strom zu einer Mobileinheit (11), das Folgendes umfasst:
eine Verbindungseinheit (10), mit der die Mobileinheit (11) verbunden werden kann;
eine Stromerzeugungseinheit (3; 18) zum Umwandeln des empfangenen Wechselstroms in Gleichstrom;
eine Ladeeinheit (8) zum Abgeben einer Ladung von Strom, die durch die Stromerzeugungseinheit (3; 18) erzeugt wird; und
eine Steuerungseinheit (21) zum Bestimmen, ob die Mobileinheit (11) mit der Verbindungseinheit (10) verbunden ist,
**dadurch gekennzeichnet, dass**
die Steuerungseinheit (21) dergestalt eingerichtet ist, dass, wenn die Mobileinheit (11) nicht mit der Verbindungseinheit (10) verbunden ist, die Steuerungseinheit (21) die Stromerzeugungseinheit (3; 18) und die Ladeeinheit (8) dergestalt verbindet, dass die Ladeeinheit (8) mit dem Strom geladen wird, der von der Stromerzeugungseinheit (3; 18) ausgegeben wird, und wenn die Mobileinheit (11) mit der Verbindungseinheit (10) verbunden ist, die Steuerungseinheit (21) die Mobileinheit (11), die Stromerzeugungseinheit (3; 18) und die Ladeeinheit (8) dergestalt verbindet, dass der Strom als eine Summe des Stroms, der von der Stromerzeugungseinheit (3; 18) ausgegeben wird, und des Stroms, der von der Ladeeinheit (8) ausgegeben wird, der Mobileinheit (11) zugeführt wird.

2. Zuführungssystem nach Anspruch 1, **dadurch gekennzeichnet, dass** die Steuerungseinheit (21) dazu eingerichtet ist, durch Detektieren eines Stromes in der Verbindungseinheit (10) zu bestimmen, ob die Mobileinheit (11) mit der Verbindungseinheit (10) verbunden ist.

3. Zuführungssystem nach Anspruch 1 oder 2, **dadurch gekennzeichnet, dass** die Steuerungseinheit (21) dazu eingerichtet ist, durch Detektieren einer Potenzialdifferenz in der Verbindungseinheit (10) zu bestimmen, ob die Mobileinheit (11) mit der Verbindungseinheit (10) verbunden ist.

4. Zuführungssystem nach einem der Ansprüche 1 bis 3, **dadurch gekennzeichnet, dass**, wenn detektiert wird, dass ein Zeitraum, der zuvor eingestellten Zeitbegrenzungsinformationen entspricht, nach dem Beginn der Versorgung der Mobileinheit (11) verstrichen ist, die Steuerungseinheit (21) dazu eingerichtet ist, die Versorgung der Mobileinheit (11) zu stoppen.

5. Zuführungssystem nach einem der Ansprüche 1 bis 4, **dadurch gekennzeichnet, dass**, wenn detektiert wird, dass zuvor eingestellte elektrische Energie der Mobileinheit (11) zugeführt wurde, die Steuerungseinheit (21) dazu eingerichtet ist, die Versorgung der Mobileinheit (11) zu stoppen.

6. Zuführungssystem nach einem der Ansprüche 1 bis 5, **dadurch gekennzeichnet, dass** es des Weiteren Folgendes umfasst:
eine Stromsteuerungseinheit (15; 16) zum Steuern eines Stromflusses zu der Ladeeinheit (8).

7. Zuführungssystem nach einem der Ansprüche 1 bis 6, **dadurch gekennzeichnet, dass** es des Weiteren Folgendes umfasst:
eine Spannungsaufwärtswandlungs-/abwärtswandlungseinheit (17) zum Heraufsetzen/Herabsetzen einer Spannung, die ausgegeben werden soll.

8. Zuführungssystem nach einem der Ansprüche 1 bis 7, **dadurch gekennzeichnet, dass** die Stromerzeugungseinheit (3; 18) eine Stromsteuerungseinheit aufweist, die einen Gleichstrom steuert, der ausgegeben werden soll.

9. Zuführungssystem nach einem der Ansprüche 1 bis 8, **dadurch gekennzeichnet, dass** die Stromerzeugungseinheit (3; 18) eine Umwandlungseinheit zum Umwandeln des Gleichstroms, der von einer sekundären Batterie ausgegeben wird, die in der Ladeeinheit (8) oder der Mobileinheit (11) enthalten ist, in Wechselstrom aufweist.

10. Zuführungssystem nach einem der Ansprüche 1 bis 9, **dadurch gekennzeichnet, dass** die Ladeeinheit (8) eine Vielzahl von sekundären Batterien aufweist, welche die Ladung des Gleichstromes ausgeben, und die Steuerungseinheit (21) dazu eingerichtet ist, die Stromerzeugungseinheit (3; 18) und die Vielzahl von sekundären Batterien parallel zu verschalten, wenn die Mobileinheit (11) nicht mit der Verbindungseinheit verbunden ist, und die Mobileinheit (11), die Stromerzeugungseinheit (3; 18) und die Vielzahl von sekundären Batterien in Reihe zu verschalten, wenn die Mobileinheit (11) mit der Verbindungseinheit verbunden ist.

11. Zuführungssystem nach Anspruch 10, **dadurch gekennzeichnet, dass** die Steuerungseinheit (21) dazu eingerichtet ist, die sekundäre Batterie, die geladen werden soll, aus der Vielzahl von sekundären Batterien auszuwählen, und die Stromerzeugungseinheit (3; 18) und die Vielzahl von sekundären Batterien dergestalt verbindet, dass die ausgewählte sekundäre Batterie geladen wird.

12. Zuführungssystem nach einem der Ansprüche 1 bis 11, **dadurch gekennzeichnet, dass** die Steuerungseinheit (21) dazu eingerichtet ist, elektrische Energie auf der Basis von Energieeffizienz und Bewegungsdistanz zu berechnen, um die berechnete elektrische Energie zu speichern, und die elektrische Energie zu regeln, die der Mobileinheit (11) auf der Basis des gespeicherten elektrischen Stromes zugeführt werden soll.

## Revendications

1. Système d'alimentation (20) pour l'alimentation en énergie d'une unité mobile (11), comprenant :
une unité de connexion (10) à laquelle l'unité mobile (11) peut être connectée ;
une unité de génération d'énergie (3 ; 18) pour convertir une énergie à courant alternatif reçue en une énergie à courant continu ;
une unité de charge (8) pour donner une charge d'énergie générée par l'unité de génération d'énergie (3 ; 18) ; et
une unité de commande (21) pour déterminer si l'unité mobile (11) est connectée à l'unité de connexion (10),
**caractérisé en ce que**
ladite unité de commande (21) est conçue de façon à ce que, si l'unité mobile (11) n'est pas connectée à l'unité de connexion (10), l'unité de commande (21) connecte l'unité de génération d'énergie (3 ; 18) et l'unité de charge (8) de façon à ce que l'unité de charge (8) soit chargée avec la sortie d'énergie provenant de l'unité de génération d'énergie (3 ; 18) et, si l'unité mobile (11) est connectée à l'unité de connexion (10), l'unité de commande (21) connecte l'unité mobile (11), l'unité de génération d'énergie (3 ; 18) et l'unité de charge (8) de façon à ce que l'énergie soit introduite dans l'unité mobile (11) en tant que somme de la sortie d'énergie provenant de l'unité de génération d'énergie (3 ; 18) et la sortie d'énergie provenant de l'unité de charge (8).

2. Système d'alimentation selon la revendication 1, **caractérisé en ce que** l'unité de commande (21) est conçue pour déterminer si l'unité mobile (11) est connectée à l'unité de connexion (10) en détectant un courant dans l'unité de connexion (10).

3. Système d'alimentation selon la revendication 1 ou 2, **caractérisé en ce que** l'unité de commande est conçue pour déterminer si l'unité mobile (11) est connectée à l'unité de connexion (10) en détectant une différence de potentiel dans l'unité de connexion (10).

4. Système d'alimentation selon l'une des revendications 1 à 3, **caractérisé en ce que**, s'il est détecté qu'un temps correspondant à l'information de limite de temps pré-réglé après le démarrage de l'introduction dans l'unité mobile (11) s'est écoulé, l'unité de commande (21) est conçue pour arrêter l'introduction dans l'unité mobile (11).

5. Système d'alimentation selon l'une des revendications 1 à 4, **caractérisé en ce que**, s'il est détecté qu'une énergie électrique pré-réglée a été introduite dans l'unité mobile (11), l'unité de commande (21) est conçue pour arrêter l'introduction dans l'unité mobile (11).

6. Système d'alimentation selon l'une des revendications 1 à 5, **caractérisé en ce qu'**il comprend en outre :
une unité de commande de courant (15 ; 16) pour la commande d'un courant s'écoulant vers l'unité de charge (8).

7. Système d'alimentation selon l'une des revendications 1 à 6, **caractérisé en ce qu'**il comprend en outre :
une unité d'augmentation/diminution de tension (17) pour augmenter/diminuer une tension à générer.

8. Système d'alimentation selon l'une des revendications 1 à 7, **caractérisé en ce que** l'unité de génération d'énergie (3 ; 18) comprend une unité de commande de courant qui commande un courant continu à générer.

9. Système d'alimentation selon l'une des revendications 1 à 8, **caractérisé en ce que** l'unité de génération d'énergie (3 ; 18) comprend une unité de conversion permettant de convertir la sortie d'énergie à courant continu provenant d'une batterie secondaire incluse dans l'unité de charge (8) ou dans l'unité mobile (11) en un courant alternatif.

10. Système d'alimentation selon l'une des revendications 1 à 9, **caractérisé en ce que** l'unité de charge (8) comprend une pluralité de batteries secondaires pour donner la charge de l'énergie à courant continu et l'unité de commande (21) est conçue pour connecter l'unité de génération d'énergie (3 ; 18) et la pluralité de batteries secondaires en parallèle si l'unité mobile (11) n'est pas connectée à l'unité de connexion et pour connecter l'unité mobile (11), l'unité de génération d'énergie (3 ; 18) et la pluralité de batteries secondaire en série si l'unité mobile (11) est connectée à l'unité de connexion.

11. Système d'alimentation selon la revendication 10, **caractérisé en ce que** l'unité de commande (21) est conçue pour sélectionner la batterie secondaire à chargé parmi la pluralité de batteries secondaires et connecte l'unité de génération d'énergie (3 ; 18) et la pluralité de batteries secondaires de façon à ce que la batterie secondaire soit chargée.

12. Système d'alimentation selon l'une des revendications 1 à 11, **caractérisé en ce que** l'unité de commande (21) est conçue pour calculer une énergie électrique sur la base d'une efficience énergétique et une distance de déplacement, pour stocker l'énergie électrique calculée et pour commander l'énergie électrique à introduire dans l'unité mobile (11) sur la base de l'énergie électrique stockée.
